(19) Europäisches Patentamt / European Patent Office / Office européen des brevets

(11) **EP 2 640 145 B1**

(12) **EUROPEAN PATENT SPECIFICATION**

(45) Date of publication and mention
of the grant of the patent:
**26.07.2017 Bulletin 2017/30**

(51) Int Cl.:
**H04W 28/06** (2009.01)          **H04B 7/04** (2017.01)
**H04L 1/00** (2006.01)          **H04L 1/06** (2006.01)

(21) Application number: **12360017.3**

(22) Date of filing: **16.03.2012**

(54) **Multiple-input-multiple-output (MIMO) communication with selection of TBS per stream based on E-DPDCH to DPCCH power ratios**

Mehrfacheingabe-Mehrfachausgabe-Kommunikation mit Auswahl der Transportblockgrösse, TBS, per Datenstrom basierend auf Leistungsverhältnissen von E-DPDCH zu DPCCH

Communication à entrées et sortie multiples (MIMO) à sélection de taille de blocs de transport, TBS, par flux de données se basant sur un rapport de puissance entre les canaux E-DPDCH et DPCCH.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.09.2013 Bulletin 2013/38**

(73) Proprietor: **ALCATEL LUCENT**
**92100 Boulogne-Billancourt (FR)**

(72) Inventors:
• **Wong, Shin Horng**
**Chippenham, Wiltshire SN15 3YB (GB)**
• **Baker, Matthew P J.**
**Canterbury, Kent CT2 9DB (GB)**

(74) Representative: **Sarup, David Alexander**
**Alcatel-Lucent Telecom Ltd**
**Intellectual Property Business Group**
**Christchurch Way**
**Greenwich**
**London SE10 0AG (GB)**

(56) References cited:
• **QUALCOMM INCORPORATED: "Explaining scheduler operation for UL-MIMO with an example", 3GPP DRAFT; R1-111258_EXPLAINING_SCHED_OPERATION_ UL_MI MO_EXAMPLE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Barcelona, Spain; 20110509, 3 May 2011 (2011-05-03), XP050491040, [retrieved on 2011-05-03]**
• **HUAWEI ET AL: "Initial link-level simulation results for UL MIMO", 3GPP DRAFT; R1-112208, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 16 August 2011 (2011-08-16), XP050537371, [retrieved on 2011-08-16]**
• **3GPP: "3rd Generation Partnership Project; Technical Specification Group Radio Access Network; Medium Access Control (MAC) protocol specification (Release 10)", 3GPP DRAFT; 25321-A40, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, 28 September 2011 (2011-09-28), XP050539381, [retrieved on 2011-09-28]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- ERICSSON ET AL: "Time Plan and Simulation Assumptions for UL MIMO with 64QAM", 3GPP DRAFT; R1-120347, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 1 February 2012 (2012-02-01), XP050563201, [retrieved on 2012-02-01]

**Description**

FIELD OF THE INVENTION

The present invention relates to a method for supporting multiple-input-multiple-output communications with a base station of a wireless telecommunications network, user equipment and a computer program product.

BACKGROUND

Wireless telecommunications networks are known. Base stations in such networks provide wireless connectivity to user equipment within a geographical area or cell, associated with the base station. The wireless communication links between the base station and each of the user equipment typically include one or more downlink (or forward) channels for transmitting information from the base station to the user equipment and one or more uplink (or reverse) channels for transmitting information from the user equipment to the base station.

Multiple-input-multiple-output (MIMO) techniques may be employed when the base station and, optionally, the user equipment include multiple antennas. For example, user equipment that includes multiple antennas can transmit multiple independent and distinct signals to base stations on the same a frequency, using the same code and within the same transmission time interval (TTI) which can be resolved by the base stations. For example, individual user equipment is able to transmit two streams of Enhanced Data Channel (E-DCH) in the uplink using the same uplink resource (frequency, time and code) which means that the user equipment is capable of performing a rank two transmission (as opposed to a rank one transmission which occurs with when transmitting a single E-DCH stream).

The E-DCH consists of one or more E-DCH Dedicated Physical Data Channels (E-DPDCH) and is accompanied by one E-DCH Dedicated Physical Control Channel (E-DPCCH]. The E-DPDCH carries the data traffic and the E-DPCCH carries control information to enable the E-DPDCH to be decoded.

In uplink MIMO, a secondary E-DCH stream is sent together with the primary E-DCH stream. Similar to the primary E-DCH stream, the secondary E-DCH stream consists of one or more secondary E-DPDCH (S-E-DPDCH) and one secondary E-DPCCH (S-E-DPCCH).

For E-DCH operation, resources known as grants are scheduled by the network (such as from a base station) to the user equipment. The grant indicates the ratio of the power of the E-DPDCHs (the data) to the power of the E-DPCCH (the pilot). By carefully scheduling the grants, the network can manage the Rise over Thermal (RoT), i.e. the interference, in the uplink.

3GPP TSG RAN WG1 Meeting #65 R1-111258 discloses a simulation methodology for link evaluation of uplink MIMO. These techniques are for the purposes of simulating performance, rather than for use in actual deployment. The user equipment receives two grants and the user equipment translates each these two grants to a transport block size for each stream.

3GPP TSG RAN WG1 Meeting #66 R1-112208 also discloses a link simulation methodology for uplink MIMO. The base station receiver's Ec/No is assumed to be known to the user equipment in calculating the grant, which occurs using a legacy selection method.

A relationship, function or mapping is defined between the grant and the transport block size that can be transmitted on the E-DCH. The higher the grant, the larger the transport block size the user equipment can send in a TTI.

Although providing uplink MIMO facilitates transmissions from the user equipment to the network, unexpected consequences can occur.

Accordingly, it is desired to provide an improved technique for supporting MIMO communications.

SUMMARY

According to a first aspect of the invention, there is provided a user equipment method as claimed in claim 1.

The first aspect recognizes that a problem with existing techniques is that they lead to the inappropriate utilization of the primary or secondary stream which may lead to sub-optimal communication using those streams. In particular, existing techniques may lead to an inappropriately selected transport block size for a stream, as will now be explained.

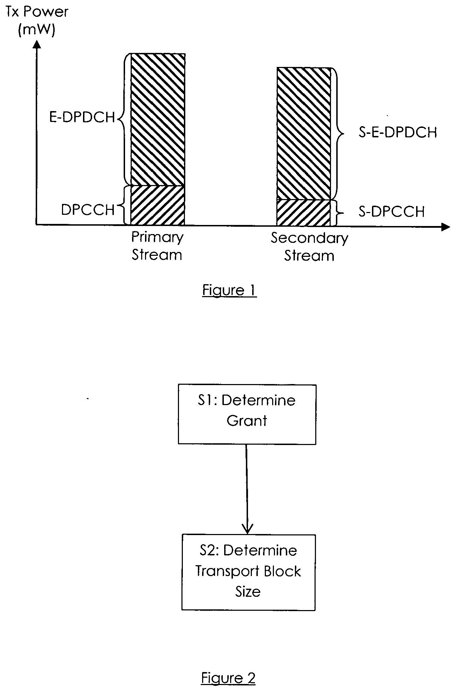

The first aspect recognises that existing techniques assume that the transmit power of the E-DPDCH and S-E-DPDCH are equal as illustrated in Figure 1. This is in order to provide for simplified power allocation between the two E-DCH streams. The S-DPCCH is usually transmitted at a lower offset power with respect to the transmit power of the DPCCH. If the secondary grant is selected to be the power ratio of S-E-DPDCH to DPCCH, then both the primary stream and the secondary stream will have exactly the same grant since, as mentioned above, the transmit power of E-DPDCH and S-E-DPDCH are equal. However, the first aspect recognizes that the secondary stream usually has a lower gain (due to a lower received signal to interference plus noise ratio (SINR)) than that of the primary stream. Hence, with an equal grant on both streams, the secondary stream may not be received with a sufficient signal quality to transmit the same transport block size as that of the primary stream. Alternatively, if the grants are on both the streams were to be reduced so that the transport block size could be set to a value that fits the signal quality of the secondary stream, then the transport block size carried by the primary stream (which usually has a higher gain, and a better signal quality), will be unnecessarily low.

The first aspect also recognizes that if the secondary grant is instead selected to be the power ratio of S-E-DPDCH to S-DPCCH, then the secondary grant will always be equal to or larger than that of the primary grant since the power of S-DPCCH is equal to or smaller than that of DPCCH. If the same relationship, function or mapping between grant and transport block size is used on the secondary stream as that used on the primary stream, then this would cause the secondary stream (which has a poor signal quality) to support a larger transport block size than that of the primary stream. This will result in a high block error rate (BER) on the secondary stream.

The first aspect also recognizes that if, alternatively, two Enhanced Relative Grant Channels (E-RGCH) are provided, each one of which schedules the grant for an associated stream, then the use of the same power for E-DPDCH and S-E-DPDCH presents the following problems. Although the use of two E-RGCH allows for different grants for the different streams, by forcing the user equipment to transmit the same power for E-DPDCH and S-E-DPDCH, the final grant used would result in either both streams having the same transport block size or the secondary stream having a larger transport block size, as described above. In addition, this approach requires the user equipment to need to monitor two E-RGCH instead of just one. Also, the rank of the channel is not constant and by having independent grants, the user equipment transmit power may increase suddenly when it transmits two streams and using the secondary grant. Since only a very high format is considered for uplink MIMO, the transmission power would almost double and it would be difficult for network to manage its RoT).

Accordingly, a method of determining a transport block size for a secondary stream is provided. The secondary stream may be transmitted in addition to a primary stream in uplink between user equipment and a base station when supporting MIMO communications. The method may comprise the step of establishing a grant associated with the secondary stream. The method may also comprise the step of determining a transport block size for the secondary stream. The transport block size may be determined using a relationship, mapping, function or lookup table which defines the transport block size for each grant. That relationship, mapping or function which defines the transport block size for each grant may be a different relationship, mapping or function compared to that used to define the relationship between each grant and transport block size for the primary stream.

By using this approach, where a different relationship, mapping, function or lookup table is used to derive the transport block size for the secondary stream to that relationship, mapping or function used to derive the transport block size for the primary stream from the grant of the primary stream enables different transport block sizes to be used, each of which may be appropriate to its associated stream. Typically, at least the grant for the primary stream may be signalled to the user equipment from the network, and the grant for the secondary stream may be either signalled or derived deterministically from the power and resources allocated to the secondary stream.

According to one embodiment, for an identical grant for the primary stream and the secondary stream, the relationship and the primary relationship determine differing transport block sizes for the secondary stream and the primary stream. Accordingly, even when the primary stream and secondary stream have an identical grant, the transport block sizes for the secondary stream and the primary stream may be determined not to be identical, each of which may be appropriate to its associated stream.

In one embodiment, for an identical grant for the primary stream and the secondary stream, the relationship determines the transport block size which is smaller than the primary transport block size determined by the primary relationship. Accordingly, even when the grant for the primary stream and the secondary stream is the same, the primary transport block size for the primary stream would be determined to be larger than that for the secondary stream. Using a separate relationship, mapping, function or lookup table to derive the transport block size of the secondary stream allows the grants of the secondary stream (which can be larger than the grant of the primary stream) to map to a smaller transport block size compared to that of the primary stream, so as to be better matched to the reception quality of the secondary stream.

In one embodiment, the relationship determines the transport block size by utilising the primary relationship to determine an intermediate transport block size from the grant which is then factored by a scalar to determine the transport block size. Accordingly, the relationship, mapping, function or lookup table used to define the relationship between grant and transport block size for the primary stream may be reused to derive the transport block size for the secondary stream.

In one embodiment, the relationship determines the transport block size by factoring the grant by a scalar to determine an intermediate grant and by then utilising the primary relationship to determine the transport block size from the intermediate grant. Again, this enables the reuse of the functionality used to derive the transport block size of the primary stream.

In one embodiment, the scalar is a value of no greater than 1. This helps to ensure that the transport block size of the secondary stream is smaller than the transport block size of the primary stream since the secondary stream is typically weaker than that of the primary stream.

In one embodiment, the method comprises the step of receiving the scalar from a network node of the wireless telecommunications network. It will be appreciated that the scalar may be semi-static or may be dynamic.

In one embodiment, a plurality of differing transport block sizes are supported for communication between the user equipment and the base station and the method comprises the step of selecting one of the plurality of differing transport block sizes for the secondary stream for whose size closest but no larger than the transport block size. It will be appreciated that the determined transport block size for the secondary stream may not be a valid transport block size since these are typically a specific set of discrete transport block sizes. Therefore, the determined transport block size may need to be rounded to a valid transport block size. For example, the determined transport block size may need to be rounded down to the next lowest valid transport block size in the set.

In one embodiment, the relationship determines the transport block size by utilising the grant to identify an index of a lookup table containing the transport block size. Typically, the transport block size increases as the index of the lookup table increases (although the reverse may be true) and there may be a one-to-one mapping between the index and a transport block size.

In one embodiment, the index comprises an Enhanced Data Channel Transport Format Combination Identifier determined from the grant.

In one embodiment, the index comprises an Enhanced Data Channel Transport Format Combination Identifier determined from the grant and an offset value.

In one embodiment, the grant is established from a power of a pilot associated with one of the primary stream and the secondary stream.

In one embodiment, the grant is signalled separately from a grant associated with the primary stream.

According to a second aspect of the invention, there is provided user equipment as claimed in claim 15.

In one embodiment, for an identical grant for the primary stream and the secondary stream, the relationship and the primary relationship determine differing transport block sizes for the secondary stream and the primary stream.

In one embodiment, for an identical grant for the primary stream and the secondary stream, the relationship determines the transport block size which is smaller than the primary transport block size determined by the primary relationship.

In one embodiment, the relationship determines the transport block size by utilising the primary relationship to determine an intermediate transport block size from the grant which is then factored by a scalar to determine the transport block size.

In one embodiment, the relationship determines the transport block size by factoring the grant by a scalar to determine an intermediate grant and by then utilising the primary relationship to determine the transport block size from the intermediate grant.

In one embodiment, the scalar is a value of no greater than 1.

In one embodiment, the user equipment comprises receiving logic operable to receive the scalar from a network node of the wireless telecommunications network.

In one embodiment, a plurality of differing transport block sizes are supported for communication between the user equipment and the base station and the determining logic is operable to select one of the plurality of differing transport block sizes for the secondary stream for whose size closest but no larger than the transport block size.

In one embodiment, the relationship determines the transport block size by utilising the grant to identify an index of a lookup table containing the transport block size.

In one embodiment, the index comprises an Enhanced Data Channel Transport Format Combination Identifier determined from the grant.

In one embodiment, the index comprises an Enhanced Data Channel Transport Format Combination Identifier determined from the grant and an offset value.

In one embodiment, the grant is established from a power of a pilot associated with one of the primary stream and the secondary stream.

In one embodiment, the grant is signalled separately from a grant associated with the primary stream.

According to a third aspect of the invention, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

> Figure 1 illustrates a relationship between the transmit powers; and
> Figure 2 illustrates the main processing steps according to one embodiment.

## DESCRIPTION OF THE EMBODIMENTS

### Overview

Referring now to Figure 2, the general approach of embodiments is to use a different function to derive the transport block size $TBS_2$ for the secondary stream from the grant for the secondary stream, than the function used to derive the transport block size $TBS_1$ for the primary stream from the grant for the primary stream. Typically, at least the grant for the primary stream is signalled to the user equipment by the base station, and the grant for the secondary stream is either signalled or derived deterministically at step S1 by the user equipment according to a predefined rule. From this grant, a transport block size for at least the secondary stream is derived at step S2.

As an example, consider a case where the primary stream's transport block size $TBS_1$ is a function $f_1$ of the grant $G_1$ (E-DPDCH:DPCCH power ratio) used for transmission in the primary stream, i.e.:

$$TBS_1 = f_1(G_1) \qquad \text{... Equation 1}$$

Currently, the function $f_1$ is implemented as a look-up table defined by 3GPP TS25.321, although it will be appreciated that the function $f_1$ may be implemented as a relationship, mapping or function.

The grant $G_1$ is the power ratio of the E-DPDCHs to the DPCCH (pilot power).

In general approach of embodiments, a separate function is used to derive the transport block size $TBS_2$ for the secondary stream from the grant for the secondary stream, i.e.:

$$TBS_2 = f_2(G_2) \qquad \text{... Equation 2}$$

where $G_2$ is the grant provided for transmission in the secondary stream.

As described above, $G_2$ can be the power ratio of S-E-DPDCHs to DPCCH or the power ratio of S-E-DPDCHs to S-DPCCH, and since the power of E-DPDCHs and S-E-DPDCHs are typically assumed to be the same, $G_2$ is always equal or greater than $G_1$.

If the existing function $f_1$ is used on the secondary stream (with $G_2$ as the input), this will result in $TBS_2 \geq TBS_1$, i.e., the secondary stream (which has a weaker radio condition) has to support a larger transport block size than that in the primary stream. However, by using a separate function $f_2$ to derive the secondary stream transport block size, it allows $G_2$ (which can be $\geq G_1$) to map to a smaller transport block size compared to that in the primary stream, so as to be better matched to the reception quality of the secondary stream.

### Embodiment 1 - Function Scaling Factor

In one embodiment the function $f_2$ is equal to function $f_1$ multiplied by a scaling factor $\alpha$, i.e.:

$$TBS_2 = f_2(G_2) = \alpha f_1(G_2) \qquad \text{... Equation 3}$$

This embodiment allows the same lookup table used in $f_1$ to be reused to derive $TBS_2$. Advantageously, the value of $\alpha$ is signalled by the network and can be semi-static or dynamic.

It should be noted that $TBS_2$ derived using Equation 3 may not be a valid transport block size since the E-TFCIs indexes to a specific set of discrete transport block sizes. Therefore the calculated $TBS_2$ may need to be "rounded" to a valid transport block size, for example rounded down to the next lower valid transport block size.

### Embodiment 2 -Grant Scaling Factor

In one embodiment, the function $f_2$ is equal to $f_1$ but with the grant $G_2$ scaled by a scaling factor $\alpha$, i.e.:

$$TBS_2 = f_2(G_2) = f_1(\alpha G_2) \qquad \text{... Equation 4}$$

This embodiment reuses function $f_1$ and since function $f_1$ maps to a valid transport block size, the calculated $TBS_2$ will be a valid transport block size.

It is expected that the secondary stream is weaker than that of the primary stream and therefore a suitable value of a in Equations 3 or 4 would be < 1.

Embodiment 3 - Index Offset

The E-TFCI is the index to the transport block size lookup table. The transport block size lookup table (defined in 3GPP TS25.321) increases as the E-TFCI increases and there is a one to one mapping between E-TFCI and transport block size. Hence the function $f_1$ also gives the E-TFCI number. To avoid confusion, a function $h_1$ is defined that takes the grant $G_1$ and gives $ETFCI_1$ (E-TFCI for primary stream) as follows:

$$ETFCI_1 = h_1(G_1) \qquad \text{... Equation 5}$$

In one embodiment, the E-TFCI for the secondary stream $ETFCI_2$, is an offset $\gamma$ (an integer) from the E-TFCI calculated using function $h_1$, i.e.:

$$ETFCI_2 = \max(h_1(G_2) - \gamma, ETFCI_{MIN}) \qquad \text{... Equation 6}$$

where $ETFCI_{MIN}$ is the minimum valid E-TFCI in the transport block size lookup table. Since the E-TFCI points to a valid transport block size, the $ETFCI_2$ derived from Equation 6 would point to a valid transport block size. The existing transport block size lookup table used by the primary stream can therefore be reused. Similar to $\alpha$, $\gamma$ can be signalled by the network and can be semi-static or dynamic.

Accordingly, it can be seen that embodiments prevent the secondary stream from using a transport block size that it cannot support or lowers the UE primary stream transport block size to match that in the secondary stream. This alleviates the problem where uplink MIMO increases the uplink throughput but the secondary stream holds down the total throughput which would otherwise occur is both streams transmit with the same transport block size.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method of determining at user equipment a transport block size for a secondary stream transmitted in addition to a primary stream by said user equipment when supporting Multiple Input Multiple Output communications with a base station of a wireless telecommunications network, said method comprising the steps of:

   receiving (S1) a grant associated with said secondary stream; and
   determining (S2) a transport block size for said secondary stream in accordance with a relationship between grant and transport block size, said relationship differing from a primary relationship between grant and transport block size used to determine a primary transport block size for said primary stream.

2. The method of claim 1, wherein for an identical grant for said primary stream and said secondary stream, said relationship and said primary relationship determine differing transport block sizes for said secondary stream and said primary stream.

3. The method of claim 1 or 2, wherein for an identical grant for said primary stream and said secondary stream, said relationship determines said transport block size is smaller than said primary transport block size determined by said primary relationship.

4. The method of any preceding claim, wherein said relationship determines said transport block size by utilising said primary relationship to determine an intermediate transport block size from said grant which is then factored by a scalar to determine said transport block size

5. The method of any preceding claim, wherein said relationship determines said transport block size by factoring said grant by a scalar to determine an intermediate grant and by then utilising said primary relationship to determine said transport block size from said intermediate grant.

6. The method of claim 4 or 5, wherein said scalar is a value of no greater than 1.

7. The method of any one of claims 4 to 6, comprising the step of receiving said scalar from a network node of said wireless telecommunications network.

8. The method of any preceding claim, wherein a plurality of differing transport block sizes are supported for communication between said user equipment and said base station and said method comprises the step of selecting one of said plurality of differing transport block sizes for said secondary stream having a size which is closest to but no larger than said transport block size.

9. The method of any preceding claim, wherein said relationship determines said transport block size by utilising said grant to identify an index of a lookup table containing said transport block size.

10. The method of claim 9, wherein said index comprises an Enhanced Data Channel Transport Format Combination Identifier determined from said grant.

11. The method of claim 9 or 10, wherein said index comprises an Enhanced Data Channel Transport Format Combination Identifier determined from said grant and an offset value.

12. The method of any preceding claim, wherein said grant is established from a power of a pilot associated with one of said primary stream and said secondary stream.

13. The method of any preceding claim, wherein said grant is signalled separately from a grant associated with said primary stream.

14. The method of any preceding claim, comprising transmitting said primary stream with said primary transport block size and said secondary stream with said transport block size.

15. User equipment operable to determine a transport block size for a secondary stream transmitted in addition to a primary stream by user equipment when supporting Multiple Input Multiple Output communications with a base station of a wireless telecommunications network, said user equipment comprising:

establishing logic operable to receive a grant associated with said secondary stream; and
determining logic operable to determine a transport block size for said secondary stream in accordance with a relationship between grant and transport block size, said relationship differing from a primary relationship between grant and transport block size used to determine a primary transport block size for said primary stream.

16. A computer program product operable, when executed on a computer, to perform the method steps of any one of claims 1 to 14.

**Patentansprüche**

1. Verfahren zum Bestimmen am Benutzerendgerät einer Transportblockgröße für einen sekundären Datenstrom, zusätzlich zu einem primären Datenstrom von besagtem Benutzerendgerät, wenn Mehrfacheingangs-/Mehrfachausgangskommunikationen mit einer Basisstation eines drahtlosen Telekommunikationsnetzwerks unterstützt werden, wobei besagtes Verfahren die folgenden Schritte umfasst:

Empfangen (S1) einer Bewilligung, die mit besagtem zweiten Datenstrom verbunden ist; und
Bestimmen (S2) einer Transportblockgröße für besagten zweiten Datenstrom in Einklang mit einer Beziehung zwischen Bewilligung und Transportblockgröße, wobei besagte Beziehung sich unterscheidet von einer ersten Beziehung zwischen Bewilligung und Transportblockgröße, die verwendet wird, um eine primäre Transportblockgröße für besagten primären Datenstrom zu bestimmen.

2. Verfahren nach Anspruch 1, wobei für eine identische Bewilligung für besagten primären Datenstrom und besagten sekundären Datenstrom besagte Beziehung und besagte primäre Beziehung verschiedene Transportblockgrößen für besagten sekundären Datenstrom und besagten primären Datenstrom bestimmen.

3. Verfahren nach Anspruch 1 oder 2, wobei für eine identische Bewilligung für besagten primären Datenstrom und besagten sekundären Datenstrom besagte Beziehung bestimmt, dass besagte Transportblockgröße kleiner ist als besagte primäre Transportblockgröße, die von besagter primärer Beziehung bestimmt worden ist.

4. Verfahren nach einem beliebigen der vorhergehenden Ansprüche, wobei besagte Beziehung besagte Transportblockgröße bestimmt, indem besagte primäre Beziehung verwendet wird zum Bestimmen einer Zwischentransportblockgröße von besagter Bewilligung, die dann mit einem Skalar multipliziert wird, um besagte Transportblockgröße zu bestimmen.

5. Verfahren nach einem beliebigen der vorhergehenden Ansprüche, wobei besagte Beziehung besagte Transportblockgröße bestimmt durch Multiplizieren besagter Bewilligung mit einem Skalars zum Bestimmen einer Zwischenbewilligung und durch Verwenden besagter primärer Beziehung danach zum Bestimmen besagter Transportblockgröße von besagter Zwischenbewilligung.

6. Verfahren nach Anspruch 4 oder 5, wobei besagter Skalar ein Wert ist, der nicht größer ist als 1.

7. Verfahren nach einem beliebigen der Ansprüche 4 bis 6, umfassend den Schritt des Empfanges besagten Skalars von einem Netzwerkknoten besagten drahtlosen Telekommunikationsnetzwerks.

8. Verfahren nach einem beliebigen der vorhergehenden Ansprüche, wobei eine Vielzahl verschiedener Transportblockgrößen unterstützt wird für die Kommunikation zwischen besagtem Benutzerendgerät und besagter Basisstation, und besagtes Verfahren umfasst den Schritt der Auswahl einer von besagter Vielzahl von verschiedenen Transportblockgrößen für besagten sekundären Datenstrom mit einer Größe, die am nächsten an der besagten Transportblockgröße liegt, aber nicht größer ist.

9. Verfahren nach einem beliebigen der vorhergehenden Ansprüche, wobei besagte Beziehung besagte Transportblockgröße bestimmt durch Verwenden besagter Bewilligung zur Identifizierung eines Index einer Nachschlagetabelle, die besagte Transportblockgröße enthält.

10. Verfahren nach Anspruch 9, wobei besagter Index einen verbesserten Datenkanal-Transportformatkombinationsidentifizierer (Enhanced Data Channel Transport Format Combination Identifier) umfasst, der aus besagter Bewilligung bestimmt wird.

11. Verfahren nach Anspruch 9 oder 10, wobei besagter Index einen verbesserten Datenkanal-Transportformatkombinationsidentifizierer umfasst, der aus besagter Bewilligung und einem Versatzwert bestimmt wird.

12. Verfahren nach einem beliebigen der vorhergehenden Ansprüche, wobei besagte Bewilligung erstellt wird aus der Leistung eines Piloten, der mit einem von besagtem primären Datenstrom und besagtem sekundären Datenstrom verbunden ist.

13. Verfahren nach einem beliebigen der vorhergehenden Ansprüche, wobei besagte Bewilligung separat von einer Bewilligung signalisiert wird, die mit besagtem primären Datenstrom verbunden ist.

14. Verfahren nach einem beliebigen der vorhergehenden Ansprüche, umfassend das Übertragen besagten primären Datenstroms mit besagter primärer Transportblockgröße und besagten sekundären Stroms mit besagter Transportblockgröße.

15. Benutzerendgerät, betreibbar zum Bestimmen einer Transportblockgröße für einen sekundären Datenstrom, der zusätzlich zu einem primären Datenstrom vom Benutzerendgerät übertragen wird, wenn Mehrfacheingangs-/Mehrfachausgangskommunikationen mit einer Basisstation eines drahtlosen Telekommunikationsnetzwerks unterstützt werden, wobei besagtes Benutzerendgerät umfasst:

Erstellen einer Logik, die betreibbar ist zum Empfangen einer Bewilligung, die mit besagtem sekundären Datenstrom verbunden ist; und
Bestimmen einer Logik, betreibbar zum Bestimmen einer Transportblockgröße für besagten sekundären Datenstrom in Einklang mit einer Beziehung zwischen Bewilligung und Transportblockgröße, wobei besagte Beziehung sich unterscheidet von einer primären Beziehung zwischen Bewilligung und Transportblockgröße, die verwendet wird zum Bestimmen einer primären Transportblockgröße für besagten primären Datenstrom.

16. Computerprogramm-Produkt, betreibbar, um bei Ausführung auf einem Computer die Verfahrensschritte gemäß einem beliebigen der Ansprüche 1 bis 14 durchzuführen.

## Revendications

1. Procédé de détermination au niveau d'un équipement d'utilisateur d'une taille de bloc de transport pour un flux secondaire transmis en plus d'un flux primaire par ledit équipement d'utilisateur lorsqu'il supporte des communications à Entrées multiples Sorties multiples avec une station de base d'un réseau de télécommunications sans fil, ledit procédé comprenant les étapes suivantes :

recevoir (S1) un octroi associé audit flux secondaire ; et
déterminer (S2) une taille de bloc de transport pour ledit flux secondaire conformément à une relation entre l'octroi et la taille de bloc de transport, ladite relation différant d'une relation primaire entre l'octroi et la taille de bloc de transport utilisée pour déterminer une taille de bloc de transport primaire pour ledit flux primaire.

2. Procédé selon la revendication 1, dans lequel pour un octroi identique pour ledit flux primaire et ledit flux secondaire, ladite relation et ladite relation primaire déterminent des tailles de blocs de transport différentes pour ledit flux secondaire et ledit flux primaire.

3. Procédé selon la revendication 1 ou 2, dans lequel pour un octroi identique pour ledit flux primaire et ledit flux secondaire, ladite relation détermine que ladite taille de bloc de transport est plus petite que ladite taille de bloc de transport primaire déterminée par ladite relation primaire.

4. Procédé selon l'une quelconque des revendications précédentes, dans lequel ladite relation détermine ladite taille de bloc de transport en utilisant ladite relation primaire pour déterminer une taille de bloc de transport intermédiaire à partir dudit octroi qui est ensuite factorisée par un scalaire pour déterminer ladite taille de bloc de transport.

5. Procédé selon l'une quelconque des revendications précédentes, dans lequel ladite relation détermine ladite taille de bloc de transport en factorisant ledit octroi par un scalaire pour déterminer un octroi intermédiaire et en utilisant ensuite ladite relation primaire pour déterminer ladite taille de bloc de transport à partir dudit octroi intermédiaire.

6. Procédé selon la revendication 4 ou 5, dans lequel ledit scalaire est une valeur non supérieure à 1.

7. Procédé selon l'une quelconque des revendications 4 à 6, comprenant l'étape de réception dudit scalaire en provenance d'un noeud de réseau dudit réseau de télécommunications sans-fil.

8. Procédé selon l'une quelconque des revendications précédentes, dans lequel une pluralité de tailles de blocs de transport différentes sont supportées pour la communication entre ledit équipement d'utilisateur et ladite station de base et ledit procédé comprend l'étape de sélection d'une de ladite pluralité de tailles de blocs de transport différentes pour ledit flux secondaire ayant une taille qui est la plus proche de ladite taille de bloc de transport, sans être plus grande.

9. Procédé selon l'une quelconque des revendications précédentes, dans lequel ladite relation détermine ladite taille de bloc de transport en utilisant ledit octroi pour identifier un indice d'une table de consultation contenant ladite taille de bloc de transport:

10. Procédé selon la revendication 9, dans lequel ledit indice comprend un Identificateur de combinaison de format de transport de canal de données amélioré déterminé à partir dudit octroi.

11. Procédé selon la revendication 9 ou 10, dans lequel ledit indice comprend un Identificateur de combinaison de format de transport de canal de données amélioré déterminé à partir dudit octroi et d'une valeur de décalage.

12. Procédé selon l'une quelconque des revendications précédentes, dans lequel ledit octroi est établi à partir d'une puissance d'un pilote associé à un dudit flux primaire et dudit flux secondaire.

13. Procédé selon l'une quelconque des revendications précédentes, dans lequel ledit octroi est signalé séparément d'un octroi associé audit flux primaire.

14. Procédé selon l'une quelconque des revendications précédentes, comprenant la transmission dudit flux primaire avec ladite taille de bloc de transport primaire et dudit flux secondaire avec ladite taille de bloc de transport.

15. Equipement d'utilisateur exploitable pour déterminer une taille de bloc de transport pour un flux secondaire transmis en plus d'un flux primaire par un équipement d'utilisateur lorsqu'il supporte des communications à Entrées multiples Sorties multiples avec une station de base d'un réseau de télécommunications sans fil, ledit équipement d'utilisateur comprenant :

une logique d'établissement exploitable pour recevoir un octroi associé audit flux secondaire ; et
une logique de détermination exploitable pour déterminer une taille de bloc de transport pour ledit flux secondaire conformément à une relation entre l'octroi et la taille de bloc de transport, ladite relation différant d'une relation primaire entre l'octroi et la taille de bloc de transport utilisée pour déterminer une taille de bloc de transport primaire pour ledit flux primaire.

16. Produit de programme informatique exploitable, lorsqu'il est exécuté sur un ordinateur, pour effectuer les étapes de procédé selon l'une quelconque des revendications 1 à 14.

Figure 1

Figure 2